# EUROPEAN PATENT APPLICATION

(11) **EP 1 463 368 A2**
(43) Date of publication of application: **29.09.2004**
(21) Application number: 04250908.3
(22) Date of filing: 20.02.2004
(51) Int. Cl.: H04Q 7/38

(54) **A method of reducing latency for non-call delivery paging**

(30) Priority: 24.03.2003 US 394138
(71) Applicant: LUCENT TECHNOLOGIES INC., Murray Hill, New Jersey 07974-0636 (US)
(72) Inventor: Tejaskumar, Patel, Randolph New Jersey 07869 (US); Rossetti, David Albert, Randolph New Jersey 07869 (US)
(74) Representative: Watts, Christopher Malcolm Kelway, Dr.

(57) **Abstract**

The paging of mobile stations normally occurs as part of a call delivery process. As a result, the mobile station needs to refrain from certain operations such as origination to permit the call delivery to take place. However, when call delivery is not the intended consequence of a mobile station page, the method of reducing latency for non-call delivery paging permits a paged mobile station or paged party to conduct operations that are normally prohibited after receiving a page message but before receiving a release message.

## Description

### BACKGROUND OF THE INVENTION

The present invention relates to the paging of mobile stations, and more particularly, reducing the latency of paging for non-call delivery. The paging of mobile stations normally occurs as part of a call delivery process. As a result, the mobile station needs to refrain from certain operations such as origination to permit the call delivery to take place. After call delivery occurs, the mobile station is released and can then perform the prohibited operations. However, this latency between paging and prohibited operation also occurs when the object of the page is not call delivery.

The set-up of push-to-talk (PTT) voice-over-IP (VoIP) services involves a non-call delivery paging of a mobile station. As a result, the latency in the non-call delivery paging causes latency in the set-up of PTT VoIP service. A better understanding of this latency and the latency in non-call delivery paging will be described in detail below in the context of setting up PTT VoIP communication.

PTT functionality enables a mobile station to quickly communicate with one or more other mobile stations substantially simultaneously, just by, for example, depressing a PIT button on the calling mobile station. VoIP refers to communication of voice using digitized voice transported over a packet data network, as compared to the usual circuit transport method of voice communication. Accordingly, PIT VoIP service strives to provide PIT functionality through VoIP communication.

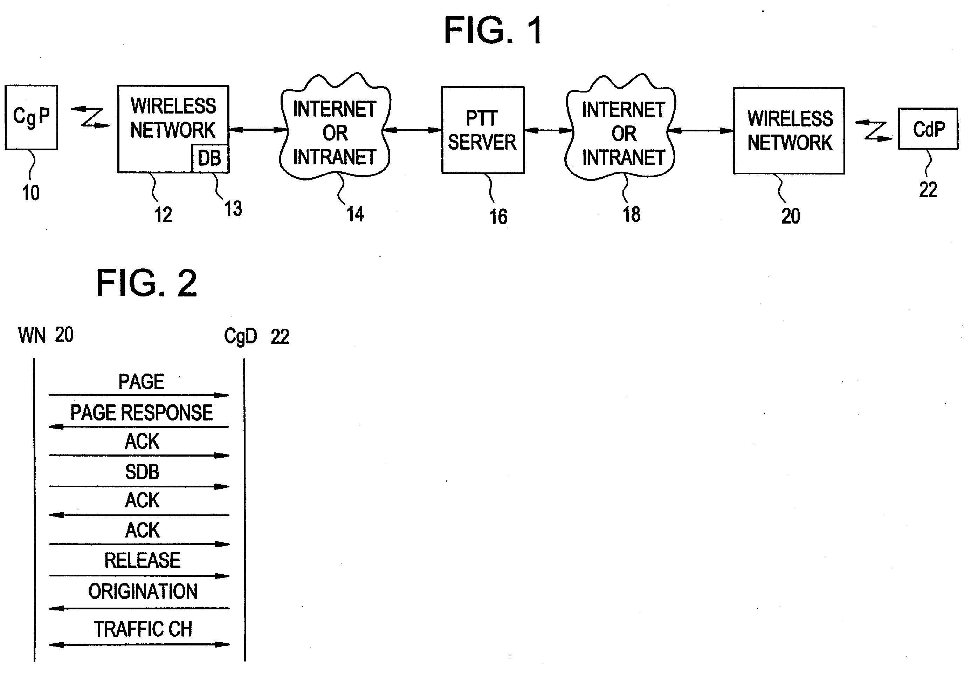

Fig. 1 illustrates a prior art general architecture for PTT VoIP communication. As shown, a calling mobile station or calling party (CgP) 10 communicates with the first wireless network 12 when initiating a PIT operation. The communication includes information such as an identifier (e.g., phone number, URL or pin number) of the party being called (i.e., called party (CdP)) 22. The first wireless network 12 then communicates with a PIT server 16 over a public or private, intranet or intemet 14 (i.e., an IP network). The first wireless network 12 provides the PIT server 16 with information on the CgP 10 and the CdP 22. The first wireless network 12 manages a database 13 of information regarding the mobile stations for which the first wireless network 12 provides wireless communication services. When the first wireless network 12 also provides PIT services, the database 13 also stores, for example, IP address information in association with the mobile station's normal identification information.

The first wireless network 12 communicates a PIT request for the CgP 10 to the PIT Server 16. The PIT request identifies the CdP 22 and also provides the IP address of the CgP 10. Using a database of information stored therein, the PIT server 16 routes the PIT request to a second wireless network 20, which in this example serves the communication needs of mobile stations within a geographic area that includes the CdP 22. The PTT request is routed from the PTT server 16 to the second wireless network 20 via a second public or private, intranet or internet 18 (i.e., an IP network). As will be appreciated, the first and second wireless networks 12 and 20 could be the same wireless network when the CdP 22 and the CgP 10 are served by the same wireless network. Likewise, the first and second public or private, intranet or internet 14 and 18 could be the same network.

Using the information, for example, the IP address of the CdP 22 received from the PTT server 16, the second wireless network 20 identifies the CdP 22 and pages the CdP 22. When the CdP 22 responds to the page and indicates the CdP 22 is available to receive a PTT VoIP communication, the second wireless network 20 signals the PIT server 16 via the second IP network 18. In turn, the PIT server 16 signals the first wireless network 12 via the first network 14. Using the IP address of the CgP 10 in the signaling from the PTT 16, the first wireless network 12 accesses the database 13 to identify the CgP 10. The first wireless network 12 then notifies the identified CgP 10 that voice communication can commence. For example, the notification typically triggers an audible notification at the mobile station 10 to alert a user that voice communication can take place.

The time required to set-up PTT VoIP communication is the time from when the CgP 10 initiates a PIT operation until the time when the CgP 10 issues the audible notification. This period of time is typically referred to as the latency in a PTT VoIP set-up. A demand currently exists in the industry to reduce this latency.

One factor contributing to the latency of PIT VoIP set-up is establishing the traffic channel to support the PTT VoIP communication between the second wireless network 20 and the CdP 22. Fig. 2 illustrates a communication flow diagram for communicating the PIT operation and subsequently establishing a traffic channel between a second wireless network and called party as shown in Fig. 1. As shown, to set-up the PIT VoIP communication, the second wireless network 20 pages the CdP 22. The CdP 22 responds with a page response and enters a page response state if the page is properly received. When the second wireless network 20 properly receives the page response, the second wireless network 20 sends an acknowledgement (ACK) message to the CdP 22 acknowledging receipt of the page response.

Next, the second wireless network 20 sends a short data burst (SDB) message to the CdP 22 notifying the CdP 22 that the CdP 22 is being called for PTT VoIP communication. A SDB message is an IP packet sent between a mobile and a wireless network without a traffic channel assigned to this task; namely, the IP packet is sent over common or shared channels. When the CdP 22 properly receives the SDB message, the CdP 22 sends an ACK message acknowledging receipt of the SDB message. The second wireless network 20, in turn, sends an ACK message acknowledging receipt of the ACK message from the CdP 22. The second wireless network 20 will then send a release message to the CdP 22. The release message indicates that the CdP 22 is released from the page (i.e., is released from the page response state), and can now perform other operations such as an origination. Accordingly. Fig. 2 demonstrates the latency in this non-call delivery paging. Because the SDB message notified the CdP 22 of intended PIT VoIP communication, the CdP 22 sends an origination message once the release message has been received. The origination message requests that the second wireless network 20 establish a traffic channel between the CdP 22 and the second wireless network 20 to support the PIT VoIP communication. This portion of Fig. 2 further demonstrates the impact the latency in non-call delivery paging has on the latency in PTT VoIP set-up.

### SUMMARY OF THE INVENTION

The paging of mobile stations normally occurs as part of a call delivery process. As a result, the mobile station needs to refrain from certain operations such as origination to permit the call delivery to take place.

However, when call delivery is not the intended consequence of a mobile station page, the present invention provides for reduced latency in non-call delivery paging. The present invention provides a method of reducing latency in non-call delivery paging by permitting a paged mobile station or paged party to conduct operations that are normally prohibited after receiving a page message but before receiving a release message.

According to one exemplary embodiment, a page message sent by a wireless network includes an identifier identifying the page message as an audit-only page message. Based on the recognition of this identifier, the paged mobile station can conduct operations such as origination without waiting for a release from the page response state.

According to another exemplary embodiment, an order message sent by a wireless network includes an identifier identifying the order message as a wakeup order. The wakeup order is similar to the audit-only page in that it may be used as a locate function for non-call delivery. Based on the recognition of the wakeup order, the paged mobile station sends an acknowledgement, and can conduct operations such as origination. Because a mobile station does not require a release message with respect to an order message, the mobile station conducts, for example, origination without waiting for a release message.

### BRIEF DESCRIPTION OF THE DRAWINGS

The present invention will become more fully understood from the detailed description given herein below and the accompanying drawings, wherein like elements are represented by like reference numerals, which are given by way of illustration only and thus are not limiting of the present invention and wherein:
Fig. 1 illustrates a prior art general architecture for PIT VoIP communication;
Fig. 2 illustrates a communication flow diagram for communicating the PIT operation and subsequently establishing a traffic channel between a second wireless network and called party as shown in Fig. 1;
Fig. 3 illustrates a well-known format of a page message;
Fig. 4 illustrates a well-known format of an order message; and
Fig. 5 illustrates a communication flow diagram for communicating the PIT operation and establishing a traffic channel between a second wireless network and called party according to one embodiment of the present invention.

### DETAILED DESCRIPTION OF EMBODIMENTS

For a proper understanding of the present invention, the well-known format for a page message will be described, and then a well-known format for an order message will be described. The embodiments of the present invention are then described, and an exemplary operation of the present invention using the architecture of Fig. 1 is described. However, it should be understood that the present invention is not limited in application to this architecture.

### Page Message Format

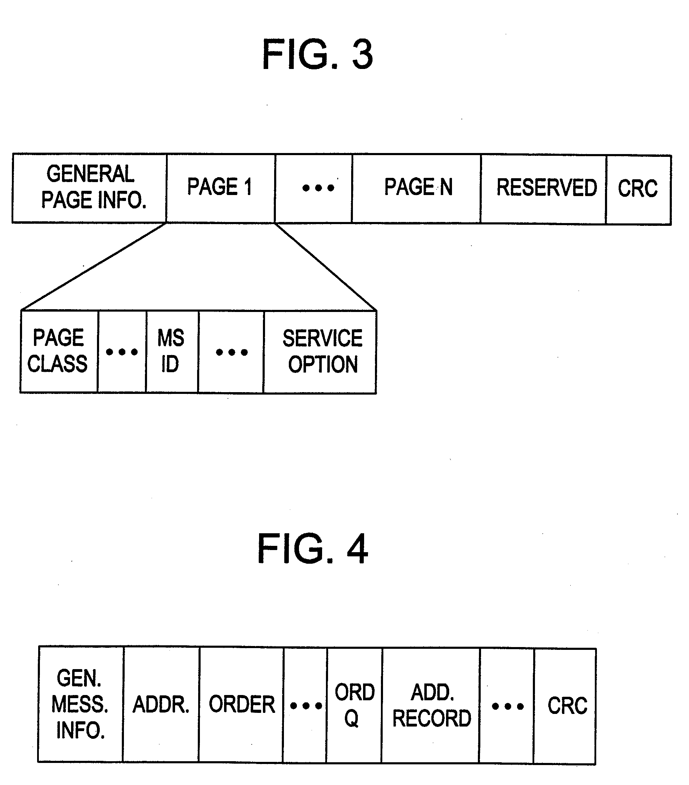

Fig. 3 illustrates a well-known format of a general page message according to TIA/EIA IS-2000. A general page message may include several pages or page records packaged together as a single message. As shown, the general page message includes a general page information section, a number of pages, a reserved section and an error correction (CRC) section. The general page information section includes general message information - for example, message number, length of message, etc. Each individual page has the format as illustrated in detail for the first page. This format will be discussed in detail below. The reserved section is a portion of the of the general page message reserved for future use. The CRC section includes the error correction code information for the general page message.

As shown, each page record includes a page class field, a mobile station (MS) identification field and a service option field as well as other fields not pertinent to this disclosure. The page class field indicates the class of mobile station identifier used in this page record. For example, classes of mobile station identifier include Broadcast, international mobile station identifier (IMSI), temporary mobile station identifier (TMSI), etc. The mobile station identification field identifies the paged mobile station using the class of mobile station identifier given in the page class field. The service option field indicates the type of service for which the mobile station is being paged (e.g. voice call delivery, short text message delivery, IP Packet Data, etc.)

### Order Message Format

Fig. 4 illustrates a well-known format of an order message according to TIA/EIA IS-2000. As shown, the order message includes a general message information section, an address section, an order section, an order qualifying section, an additional record section and a CRC section as well as other sections not pertinent to this disclosure. The general message information section includes general message information - for example, message number, length of message, etc. The address section identifies, for example, the mobile station or mobile stations to which the order is directed. The order section indicates the type of order. The order qualifying section is an additional section for identifying the type of order. Namely, together the order section and order qualifying section uniquely define a type of order - for example, an acknowledgement (ACK) message, a retry order, a periodic pilot measurement order, etc. The additional record section provides additional order-specific information, if necessary (e.g., time to wait before retry or the periodicity of performing pilot measurements.). The CRC section includes the error correction code information for the order message.

### A First Embodiment

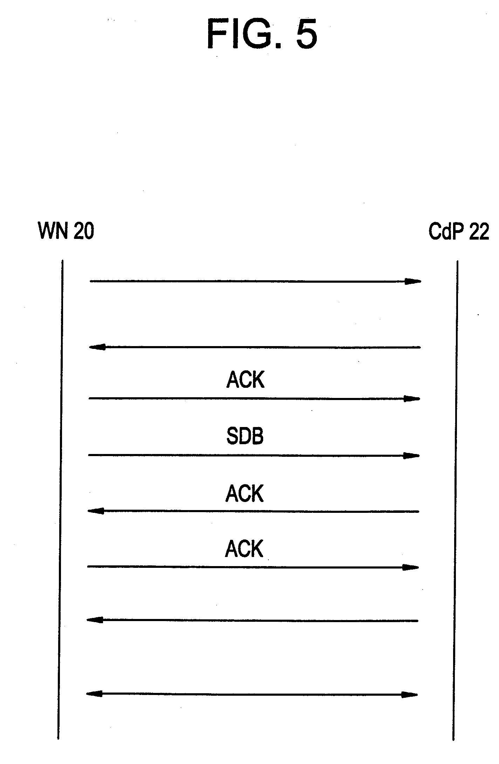

In a first embodiment of the present invention, the second wireless network 20 generates a page message for the CdP 22 having the format as illustrated in Fig. 3. However, the second wireless network 20 adds a special code in the service option field to indicate that the page message is an audit-only page message. Upon receipt of a page message identified as an audit-only page message, the CdP 22 will not prohibit operations normally prohibited until receipt of a release message. Accordingly, as will be described in detail below with respect to Fig 5, the CdP 22 can proceed with, for example, sending an origination message even though a release message has not been received from the second wireless network 20. Other prohibited operations that can be performed include sending a short text message via short message service, etc.

Fig. 5 illustrates an exemplary operation of the present invention. More specifically, Fig. 5 illustrates a communication flow diagram for communicating the PTT VoIP operation and establishing a traffic channel between the second wireless network 20 and the CdP 22 for PIT VoIP communication. As shown, to set-up the PTT VoIP communication, the second wireless network 20 pages the CdP 22. The second wireless network 20 pages the CdP 22 using an audit-only page message as discussed in detail above. The CdP 22 responds with a page response if the audit-only page message is properly received. When the second wireless network 20 properly receives the page response, the second wireless network 20 sends an acknowledgement (ACK) message to the CdP 22 acknowledging receipt of the page response.

Next, the second wireless network 20 sends a short data burst (SDB) message to the CdP 22 notifying the CdP 22 that the CdP 22 is being called for PIT VoIP communication. When the CdP 22 properly receives the SDB message, the CdP 22 sends an ACK message acknowledging receipt of the SDB message. The second wireless network 20, in turn, sends an ACK message acknowledging receipt of the ACK message from the CdP 22.

Because the SDB message notified the CdP 22 of intended PIT VoIP communication, the CdP 22 sends an origination message to the second wireless network 20. The origination message requests that the second wireless network 20 establish a traffic channel between the CdP 22 and the second wireless network 20 to support the PIT VoIP communication. As shown, because the CdP 22 identifies the page message sent from the second wireless network 20 as an audit-only page message, the CdP 22 does not wait for a release message before sending the origination message. As such, the latency with respect to non-call delivery paging is reduced, and in this exemplary operation, latency in PTT VoIP set-up is thus reduced.

### A Second Embodiment

In a second embodiment of the present invention, the second wireless network 20 generates an order message for the CdP 22 having the format as illustrated in Fig. 4. However, the second wireless network 20 uses a special code in the order field or the order qualifying field to indicate that the order message is a wakeup order. The CdP 22 recognizing the order message as a wakeup order directed to itself, sends an acknowledgement response. Because the wakeup order is not a page, the mobile station remains capable of initiating other services such as origination.

With respect to Fig 5 discussed above, according to this embodiment of the present invention, the second wireless network 20 would send the wakeup order message to the CdP 22 instead of the audit-only page message and would receive an acknowledgement response as opposed to a page response. Otherwise, the operation shown in Fig. 5 is the same for this embodiment. Accordingly, the CdP 22 can proceed with, for example, sending an origination message even though a release message has not been received from the second wireless network 20.

Furthermore, as is well-known, mobile stations operate in a slotted and non-slotted mode. In the slotted mode, the mobile station operates in a powered down or sleep state to save battery life and only awakes (e.g., powers up) to monitor a shared or common channel periodically. In the non-slotted mode, the mobile station is continually in the awake state. Typically, when a mobile station receives a page message, the mobile station, if in the slotted mode, will move to the non-slotted mode for a fixed period of time (e.g., 12 seconds). In one version of this embodiment of the present invention, a slotted mobile station operates in the same manner when a wakeup order is received.

In another version of this embodiment, the wakeup order according to the present invention provides the added flexibility of being able to specify the period of time a slotted mobile station remains in the awake state in response to the wakeup order. Specifically, according to this further aspect of the second embodiment, the second wireless network 20 places data in the additional record field indicating the period of time the mobile station is to remain in the awake state in response to the wakeup order.

It will further be appreciated that the wakeup order could also be used to keep a mobile station, like the CdP 22, awake after receipt of an SDB message and until another SDB message could be delivered. In this case, the wireless network would know that the mobile was awake and could send messages immediately.

The invention being thus described, it will be obvious that the same may be varied in many ways. Such variations are not to be regarded as a departure from the spirit and scope of the invention, and all such modifications as would be obvious to one skilled in the art are intended to be included within the scope of the present invention.

## Claims

1. A method of reducing latency in non-call delivery paging of a mobile station (10), comprising:
performing, at the mobile station (10), a prohibited operation without waiting for a release message when a page message identifiable as an audit-only page message is received, the prohibited operation being an operation prohibited from being performed after receipt of the page message paging the mobile station (10) and before receipt of the release message releasing the prohibition.

2. The method of claim 1, wherein the page message includes an identifier indicating the page message is an audit-only page message.

3. The method of claim 2, wherein the identifier is in a service option field of the page message.

4. The method of claim 1, wherein the performing a prohibited operation step sends an origination message.

5. The method of claim 1, further comprising:
receiving the audit-only page message at the mobile station (10); and
sending a page response in response to the audit-only page message.

6. The method of claim 1, further comprising:
receiving a short data burst (SDB) message; and
sending an acknowledgement of the SDB message.

7. The method of claim 6, wherein the SDB message indicates a push-to-talk voice-over-IP set-up.

8. A method of reducing latency in non-call delivery paging of a mobile station, comprising:
receiving, at a wireless network (12), an origination message from the mobile station (10) without having sent a release message for a previously sent page message paging the mobile station (10).

9. The method of claim 8, prior to the receiving step, further comprising:
sending the page message paging the mobile station (10), the page message including an identifier indicating the page message is an audit-only page message.

10. The method of claim 8, further comprising:
receiving a page response from the mobile station (10).
